# FASCICULE DE BREVET EUROPEEN

(11) **EP 0 949 983 B1**
(45) Date de publication et mention de la délivrance du brevet: **19.02.2003**
(21) Numéro de dépôt: 97952117.6
(22) Date de dépôt: 19.12.1997
(51) Int. Cl.: B23K 26/10, B23K 26/08

(54) **INSTALLATION DE RABOUTAGE D'AU MOINS DEUX PIECES METALLIQUES PAR SOUDAGE AU MOYEN D'UN FAISCEAU A HAUTE DENSITE D'ENERGIE**
ANLAGE ZUM ANEINANDERFÜGEN UND SCHWEISSEN VON ZWEI WERKSTÜCKEN MITTELS EINES HOCHDICHTEN ENERGIESTRAHLES
SYSTEM FOR WELDING AT LEAST TWO METAL PARTS USING A HIGH DENSITY POWER BEAM

(30) Priorité: 27.12.1996 FR 9616118
(43) Date de publication de la demande: 20.10.1999
(73) Titulaire: Renault Automation Comau, 92365 Meudon La Forêt Cedex (FR)
(72) Inventeur: BEZIVIN, Philippe, F-78580 Maule (FR); DUJARDIN, Gauthier, F-91120 Palaiseau (FR); FANJAT, Serge, F-78114 Magny les Hameaux (FR); TANGUY, Jean-Jacques, F-78260 Achères (FR)
(74) Mandataire: Robert, Jean-Pierre
(86) Numéro de dépôt international: FR9702364
(87) Numéro de publication internationale: WO98029215

(56) Documents cités:
- EP-A- 0 483 652
- EP-A- 0 655 293
- DE-U- 9 419 960

## Description

L'invention concerne les machines de confection de pièces en tôle à partir de deux ou plusieurs éléments, avec lesquelles on procède à leur liaison par soudage bord à bord, au moyen d'un faisceau à haute densité d'énergie.

Dans l'industrie automobile par exemple, certaines pièces de carrosserie sont réalisées selon cette technique. Les machines ou installations mises en oeuvre peuvent être classées en deux catégories. Dans la première deux transporteurs parallèles déplacent en synchronisme chaque pièce d'un couple de pièces à rabouter en les rapprochant progressivement l'une de l'autre, pour les accoster sous pression et les maintenir ainsi l'une contre l'autre. Un faisceau laser fixe est pointé sur le plan de joint des pièces qui défilent et assure la soudure des pièces. Dans la seconde catégorie les pièces sont bridées chacune entre deux mâchoires, les couples de mâchoires étant ensuite rapprochés l'un de l'autre pour accoster les pièces par leur bord et les maintenir en contact sous pression. Un faisceau laser est ensuite déplacé le long du plan de joint des pièces pour effectuer la soudure.

Les machines de l'une ou de l'autre des catégories sont en général imposantes et encombrantes car les forces mises en oeuvre pour réaliser et maintenir l'accostage sous pression sont importantes. En outre elles sont dédiées à une géométrie de pièces, ce qui n'autorise aucune flexibilité dans la production.

Or la flexibilité d'un poste de travail, dans l'industrie automobile notamment, constitue un impératif à satisfaire pour optimiser les lignes de production, lesquelles doivent pouvoir accepter le plus grand nombre possible de modèles avec un minimum de changement d'outils et de temps improductif.

Par la présente invention, on propose de satisfaire à cet impératif pour ce qui concerne le raboutage de pièces par soudure au laser, au moyen d'une installation de soudage dont l'architecture est adaptée à des changements rapides de programme de soudage.

Ainsi une installation selon l'invention, pour souder bout à bout au moins deux pièces métalliques en feuille au moyen d'un faisceau laser et plus généralement au moyen d'un faisceau à haute densité d'énergie (un faisceau d'électrons par exemple), comportant un bâti général fixe définissant un repère de référence, de support d'un émetteur du faisceau déplaçable par rapport à ce bâti général fixe, un bâti de bridage des pièces maintenues l'une contre l'autre avec une pression d'accostage, est caractérisée par le fait que le bâti de bridage comporte une structure comportant des moyens de mise en référence dans le repère du bâti général et une table formée d'éléments de bridage autonomes dans laquelle l'agencement des éléments est dédié à la géométrie des pièces à rabouter, la table étant déplaçable par rapport à la structure entre des premières positions dans lesquelles la table est indépendante de la structure et une seconde position dans laquelle la table est attelée à la structure et par là, mise en référence dans le repère du bâti général. Il faut entendre par émetteur du faisceau la partie terminale de l'installation productrice et directrice de ce faisceau de laquelle sort le faisceau pour atteindre la pièce à traiter. C'est en général un élément porteur d'un jeu de miroirs et d'organes de focalisation.

Ainsi, dans l'invention le bâti de bridage des pièces à assembler par soudage n'est plus, comme dans toutes les installations existantes, soit fixe sous une tête de soudage mobile, soit en forme de transporteurs parallèles équipés de moyens pour entraîner les pièces en synchronisme sous la tête de soudage et pour les appliquer fortement l'une contre l'autre. Au contraire, l'énergie à dépenser pour brider les pièces avec accostage sous pression comme l'exige la technique, est embarquée avec la table et ne requiert aucun apport ou raccordement extérieur.

L'un des avantages de l'invention est de pouvoir disposer d'une installation dans laquelle il existe des moyens qui sont communs pour l'ensemble des pièces à traiter et des moyens spécifiques à ces pièces s'adaptant aux moyens communs grâce à une sorte d'interface identique pour tous les moyens spécifiques. On parvient ainsi à une utilisation très flexible de l'installation qui peut accepter des pièces différentes, les adaptations à réaliser pour passer d'une pièce à l'autre étant réduites à des interventions sur la commande des mouvements relatifs entre le bâti porteur du faisceau laser et le bâti de bridage.

Deux modes de réalisation de l'invention ont été envisagés. Dans l'un d'eux la table formée d'éléments de bridage est séparée des moyens de manutention nécessaires à l'installation pour alimenter en pièces le poste de soudage et pour en évacuer les pièces soudées. Dans l'autre, la table constitue des moyens de manutention des pièces à souder et soudées. L'intérêt du premier mode réside dans le fait que les mouvements de la table sont limités entre une position de réception des pièces et une position opérationnelle dans laquelle elle est mise en référence dans le bâti général alors que sont activés les éléments de bridage. L'intérêt du second mode de réalisation réside dans le fait que le bridage est assuré à l'extérieur de la zone de soudage donc à l'extérieur de l'environnement dangereux du faisceau laser, ce qui permet l'intervention humaine pour procéder aux opérations de chargement ou de déchargement et donc de pouvoir se dispenser de l'usage de moyens robotisés. On notera également que dans ce cas on peut réaliser les opérations de bridage et accostage en temps masqué, pendant les opérations de chargement et de cbnvoyage, ce qui autorise des cadences élevées.

Dans les deux cas, il est possible de proposer de nombreuses architectures d'installation qui permettent d'optimiser l'emprise au sol et d'adapter l'installation aux organisations particulières d'atelier et aux moyens de manutention existant entre les différentes unités de production des pièces, par exemple d'une carrosserie automobile.

D'autres caractéristiques et avantages ressortiront de la description donnée ci-après d'exemples de réalisation de l'invention.

Il sera fait référence aux dessins annexés parmi lesquels :
- la figure 1 illustre un premier mode de réalisation d'une installation conforme à l'invention, représenté schématiquement vu de dessus,
- la figure 2 est une vue schématique en élévation de la partie centrale de l'installation de la figure 1 avant une opération de soudage,
- la figure 3 est une même vue schématique que la figure 2 de cette partie centrale réalisant le soudage,
- la figure 4 illustre une variante de réalisation d'une installation conforme au premier mode de réalisation de l'invention, par une vue schématique de dessus de cette installation,
- la figure 5 est une vue schématique d'un second mode de réalisation de l'installation conforme à l'invention, vu de dessus.

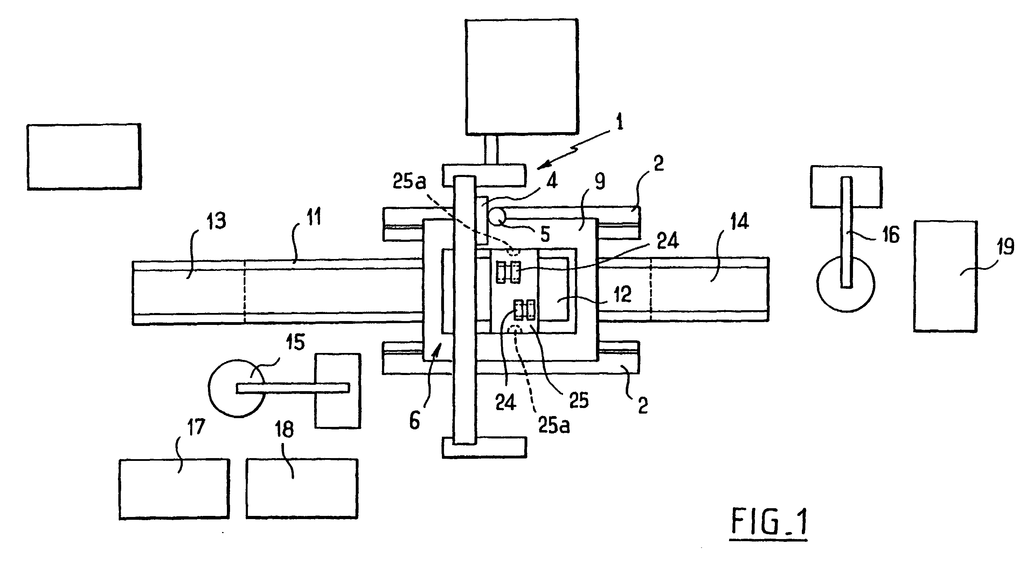

Dans le mode de réalisation représenté aux figures 1, 2 et 3, l'installation comporte un bâti général qui est ici constitué par un portique 1 fixe et par des rails 2 également fixes par exemple sur un sol 3. Le portique 1 reçoit à coulissement dans une direction transversale aux rails 2, un support 4 pour l'émetteur d'un faisceau à haute densité d'énergie 5 (laser).

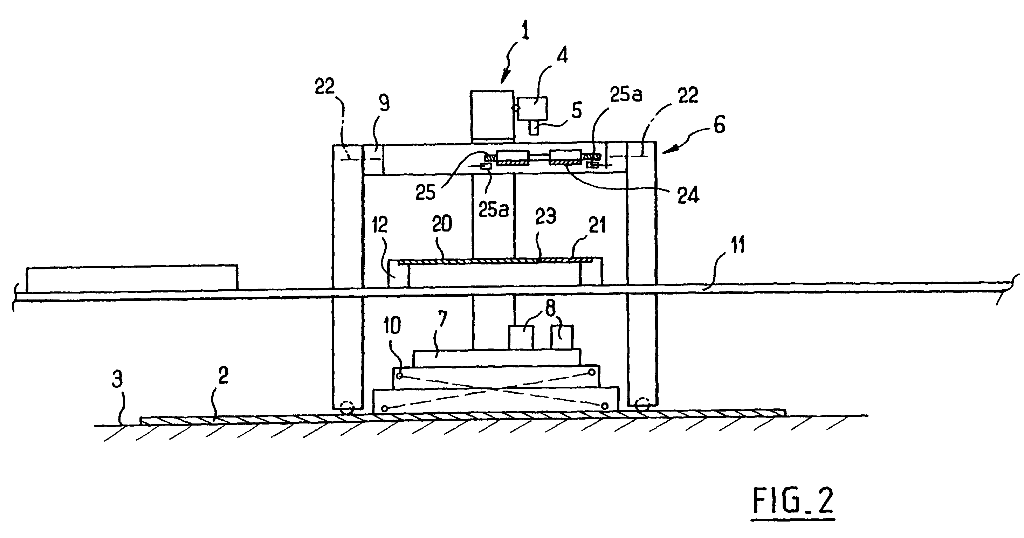

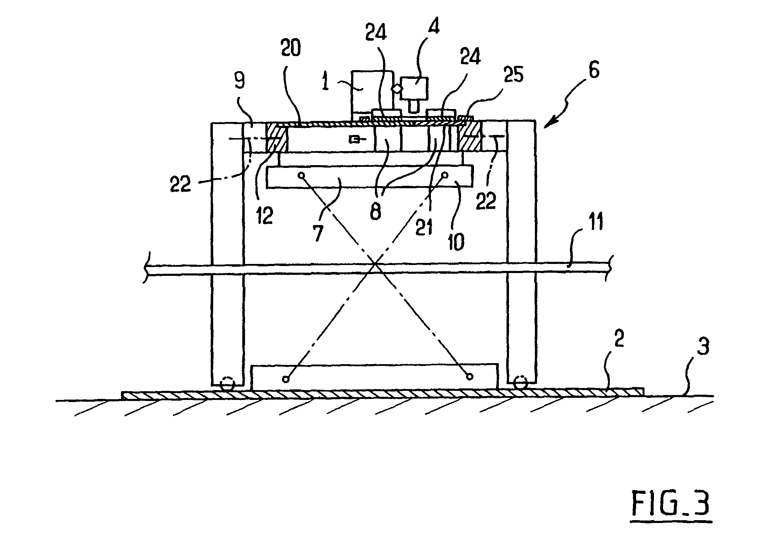

Un bâti de bridage des pièces à souder comporte une structure 6 reliée au bâti général (ici roulante sur les rails 2) et une table 7 porteuse d'éléments autonomes de bridage 8. Dans la réalisation représentée, la structure 6 est en réalité formée par un cadre 9 qui définit la distance entre l'émetteur 5 du faisceau laser et les pièces raboutées, ce cadre 9 pouvant être déplacé de manière contrôlée et précise le long des rails 2 sous le portique 1. La table de bridage 7, porteuse des éléments de bridage 8, est quant à elle portée par le plateau 10 mobile verticalement d'un dispositif élévateur connu en lui-même. A la figure 2, le plateau 10 est représenté en position basse tandis qu'à la figure 3 il est représenté en position haute c'est-à-dire à une altitude telle que le plan de bridage défini par les éléments 8 est situé à la distance requise de l'émetteur laser 5.

L'installation représentée comporte un convoyeur 11 parallèle aux rails 2 et est située à une altitude intermédiaire entre les altitudes haute et basse du plateau élévateur 10. Ce convoyeur traverse la structure 6 appartenant au bâti de bridage et passe sous le cadre 9 formant la partie supérieure de cette structure. Sur ce convoyeur des palettes 12 peuvent être déplacées depuis un poste 13 de chargement jusqu'à un poste 14 de déchargement.

Des moyens de manutention 15 et 16 par exemple des robots, assurent le chargement et déchargement des palettes 12. Par exemple le robot 15 vient prendre chacune des deux pièces à assembler dans la pile correspondante 17, 18 pour les placer sur la palette présente au poste de chargement 13. Le robot 16 quant à lui prend en charge la pièce soudée qui se trouve sur une palette présente au poste de déchargement 14 pour la placer sur une pile qui se constitue sur un support d'évacuation 19.

Lorsqu'une palette 12 chargée des deux flancs 20 et 21 à souder bord à bord parvient au poste de soudage sur le convoyeur 11, elle est arrêtée dans ce poste à l'aplomb de la table 7 qui est en position basse comme illustré sur la figure 2. On commande ensuite l'élévation du plateau 10 qui entraîne la palette 12 en direction du cadre 9. Lorsque la palette 12 est au niveau de ce cadre 9, elle est maintenue en position dans ce cadre par des moyens de centrage et de maintien représentés symboliquement par les traits mixtes 22. Dans cet état, les éléments modulaires de verrouillage à effet magnétique sont activés de sorte que les pièces 20 et 21 sont fermement bridées et pressées l'une contre l'autre le long de leur bord en concact 23. C'est donc par l'intermédiaire de la palette 12 et des pièces qu'elle porte que la table 7 est placée en référence dans le bâti général.

On notera sur les figures la présence de culasses 24 dont le rôle est, au moment du bridage, celui décrit dans le brevet ci-dessus mentionné lorsque les pièces 20 et 21 sont d'épaisseur trop faible pour constituer à elles seules des éléments de fermeture du circuit magnétique de bridage. Dans le mode de réalisation représenté, ces culasses sont constituées par des plaques ferromagnétiques situées à l'aplomb des éléments de bridage magnétiques 8 et suspendues dans le bâti 6 au moyen d'un support 25 lui-même reposant sur des taquets escamotables 25a appartenant par exemple au cadre 9. Ainsi, lorsque la palette 12 monte avec le plateau élévateur 10, les pièces 20 et 21 rencontrent d'abord les culasses 24 qui encadrent les joints 23 à réaliser juste à l'aplomb des éléments modulaires 8. Dans la poursuite de l'élévation, le support 25 est également entraîné par la palette 12 jusqu'à la position représentée à la figure 3.

La palette 12 étant maintenue en position dans le cadre 9 et les éléments de bridage étant activés, on procède à l'ajustement de la position de l'émetteur 5 du faisceau laser au droit du joint 23 en agissant sur la position du bâti de bridage 6 par rapport au bâti général 1, dans lequel le faisceau laser est référencé, le long de ces rails 2 et on procède à l'opération de soudure. Cette opération de soudure peut mettre en oeuvre un mouvement plan du bâti de bridage dans le bâti général, le faisceau étant fixe, un mouvement plan du faisceau dans le bâti général, le bâti de bridage étant maintenu fixe dans le repère du bâti général ou bien un partage des mouvements entre le faisceau et le bâti de bridage. Dans le même temps, le plateau élévateur 10 s'est abaissé, ce qui dégage complètement le convoyeur 11 et ce qui permet de faire transiter une palette vide 12 depuis le poste de déchargement 14 jusqu'au poste de chargement 13. Ce transfert étant réalisé, le plateau élévateur remonte pour reprendre en charge la table de bridage alors que le soudage se termine. A la fin du soudage, les éléments 8 de bridage magnétique sont désactivés, le plateau élévateur redescend avec les culasses et le support jusqu'à ce que ce support reprenne appui sur les taquets 25a qui le maintiennent suspendu. Les culasses sont ainsi retenues dans la position représentée à la figure 2 tandis que la palette est déposée sur le convoyeur 14 alors que le plateau élévateur 10 rejoint sa position basse. Les pièces 20 et 21 sur la palette 12 soudées sont transférées par le convoyeur 11 à l'emplacement 14 de déchargement tandis que la palette 12 qui était au poste de chargement 13 a été chargée et est transférée au poste de soudage.

Lorsqu'il s'agit de souder des pièces telles que 20 et 21 d'un autre modèle, le changement d'outillage s'opère de la manière suivante. On effectue un cycle à vide de sorte que lorsque le plateau élévateur 10 est en position haute, on procède au déverrouillage de la palette 12 par rapport au cadre 9 qui la supporte sans désactiver le bridage magnétique. Le plateau élévateur 10 entame sa descente, tandis que les taquets 25a de soutien du support 25 restent ou sont escamotés. Au niveau du convoyeur 11, la palette est arrêtée et elle reste équipée d'une part des culasses et du support associé et d'autre part de la table de bridage 7 avec les éléments 8. En effet, le bridage magnétique n'ayant pas été interrompu, la palette 12, les culasses 24 et la table 7 avec les éléments 8 constituent un ensemble monobloc qui peut être évacué par le transporteur 11.

La palette 12 qui entre dans le poste de soudage est de la même manière porteuse d'une table 7 équipée d'éléments modulaires 8 disposés de manière à correspondre au nouveau modèle à souder ainsi que des culasses 24 et du support 25 correspondant, ceci grâce à un bridage à vide réalisé au préalable sur la palette 12. Le plateau élévateur 10 place la palette 12 ainsi équipée dans le cadre 9, les taquets de suspension du support 25 ayant été au préalable escamotés. On procède ensuite au débridage des culasses et lors de la descente du plateau 10, les culasses sont maintenues suspendues grâce aux taquets qui ont été sortis tandis que la nouvelle table 7 reste sur le plateau 10 alors que la nouvelle palette 12 est évacuée comme décrit précédemment. On peut ainsi poursuivre l'exécution de l'assemblage par soudure d'un nouvelle série de pièces, l'outillage correspondant à cette nouvelle série ayant été par l'opération précédente, mis en place à l'intérieur du poste de soudage.

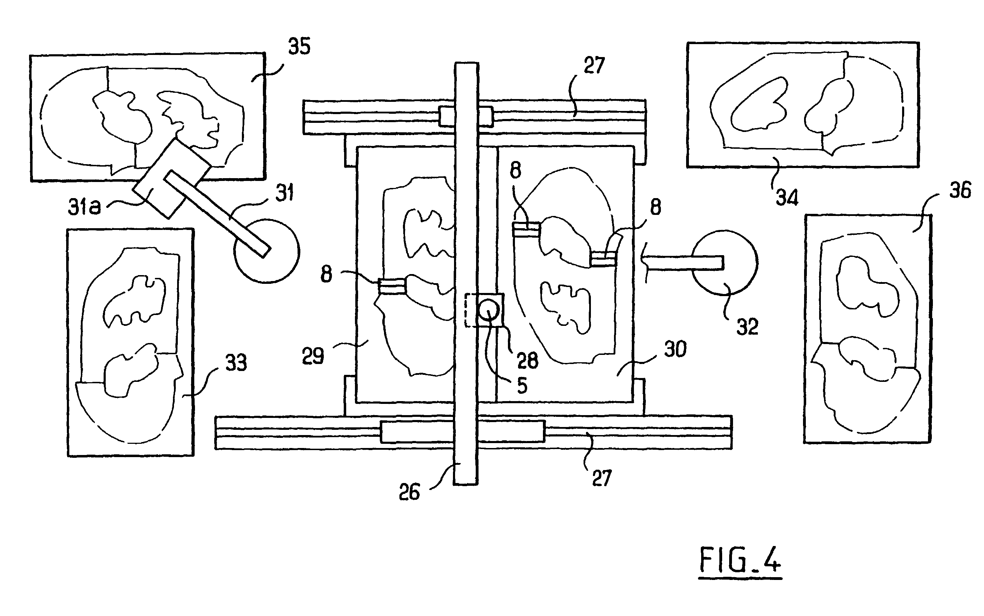

La figure 4 illustre schématiquement par une vue de dessus une variante de réalisation de l'installation conforme au premier mode de réalisation représenté aux figures précédentes. Dans cette variante de réalisation, le poste de soudage comporte un émetteur de rayons laser 5 porté par un support du genre portique à deux axes. En effet, le portique en question comporte une traverse 26 mobile dans une première direction parallèlement à elle-même grâce à des rails 27 tandis que l'émetteur est porté par un chariot 28 capable de parcourir la traverse 26. Sous ce portique, deux tables 29 et 30 sont disposées côte à côte et portent des éléments de bridage tels que ceux 8 portés par la table 7 des figures précédentes. Chaque table est retenue stationnaire mais de manière amovible dans une position référencée par rapport aux rails 27. La table 29 est desservie par un robot 31 tandis que la table 30 est desservie par un robot 32. Les robots sont capables d'extraire d'une pile respectivement 33 et 34 les deux pièces à souder qui ont été maintenues dans la pile côte à côte. Le robot peut donc les déposer sur la table de bridage 29 et 30 correspondante lorsque celle-ci est dégagée du portique 26. Lorsque les pièces sont soudées, chacun des robots est apte à extraire les pièces des tables 29 et 30, le débridage ayant été réalisé pour les déposer en piles sur un support d'évacuation respectivement 35 et 36.

Si l'épaisseur des tôles à souder demande l'emploi de culasses magnétiques, le préhenseur de chaque robot sera équipé de moyens pour déposer et conserver ces culasses. Plus précisément, le préhenseur tel que 31a de chaque robot, est équipé avant la mise en place du premier couple de pièces à souder sur la table telle que 29, des culasses nécessaires au bridage magnétique. Ces culasses sont disposées dans ce préhenseur de sorte que lorsqu'il prend en charge les pièces dans la pile 33 pour les disposer sur la table 29, les culasses sont au droit des joints à souder. En libérant les pièces sur la table 29, le robot libère également les culasses. Le bridage des pièces s'opère comme décrit dans le brevet français au nom de la demanderesse déjà mentionné, le soudage s'opère en pilotant les mouvements du portique 26 dans le repère de référence des rails 27 et de la table 29 tandis que la table 30 est chargée de la même manière par le robot 32. Le soudage réalisé au droit de la table 29 étant terminé, on commande le dégagement du portique 26 et le débridage des pièces ; le robot 31 vient prendre l'ensemble soudé ainsi que les culasses qui encadrent les joints réalisés. Il dépose l'ensemble soudé sur le support d'évacuation 35 tout en conservant dans son préhenseur 31a les culasses qu'il déposera avec les nouvelles pièces sur la pièce sur la table de bridage 29. Le déchargement et le chargement qui viennent d'être décrits se sont opérés pendant le soudage des pièces bridées sur la table 30. Cette disposition permet d'utiliser le poste de soudure de la manière la plus efficace possible.

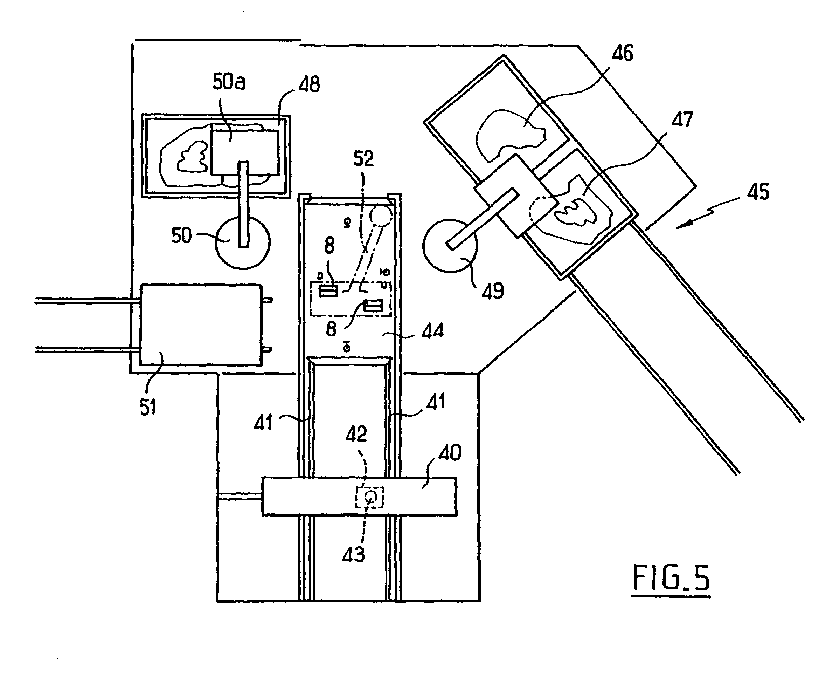

L'installation représentée à la figure 5 illustre un des modes de réalisation de l'invention dans lequel le bâti général comporte une poutre 40 enjambant une structure de guidage 31 formée par exemple par des rails et sous lequel est monté à coulissement un chariot 42 portant l'émetteur de faisceau laser 43. Une table de bridage 44 en forme de palette peut être déplacée le long des rails 41 depuis un poste de chargement situé à l'une des extrémités des rails 41 comme représenté à la figure 5, jusque sous la poutre 40. Cette table 44 porte des moyens de bridage magnétiques 8 conformes à ceux du brevet français rappelé ci-dessus. L'installation possède également un dispositif 45 d'amenée des pièces 46 et 47 à assembler par soudage bout à bout et un support 48 d'évacuation des pièces soudées. Un robot 49 permet le transfert de chacune des pièces 46 et 47 depuis le dispositif 45 jusqu'au poste de chargement où se trouve la table 44 tandis qu'un robot 50 permet de retirer les pièces soudées de la table 44 lorsqu'elle est à son poste de chargement/déchargement pour les déposer sur le support d'évacuation 48. Un support secondaire 51 est destiné à recevoir les pièces défectueuses et est desservi par le robot 50.

Le cycle de base de fonctionnement de cette installation est le suivant : au moyen du robot 49 on dispose les pièces 46 et 47 côte à côte sur la table de bridage 44. A l'aide du robot 50 on dispose sur les pièces ainsi mises en place les culasses aidant au bridage magnétique, si besoin est. Dans une variante de réalisation, la mise en place des culasses, leur retrait et leur stockage peuvent être assurés par un système mécanique 52 embarqué avec la table 44, ce système simple pouvant se résumer à une potence pivotante pourvue d'un plateau mobile verticalement et équipé de moyen de préhension des culasses. On procède ensuite à la mise en référence des pièces dans le repère palette et à l'activation progressive au fur et à mesure du chargement des flancs à souder, des moyens de bridage 8 réalisant le maintien des pièces 46 et 47 sur la table 44 ainsi que leur accostage sous pression. On déplace la table 44 en direction de la poutre 40. Il faut noter que certaines opérations de bridage peuvent être réalisées au cours du déplacement. Le poste de soudure comporte des éléments de détection directe ou indirecte de la position relative des joints à souder et de l'émetteur de faisceau laser 43 qui en réponse commandent l'ajustement de cette position relative en agissant sur la position de la table 44 sous la poutre 40 avant de procéder aux opérations de soudure. Il s'agit là de la mise en référence de la table 44 dans le repère du faisceau donc du bâti général de la machine. Ici aussi les mouvements relatifs faisceau/pièces peuvent être assurés de diverses manières.

La soudure étant réalisée, la table 44 est retournée au poste de chargement/déchargement situé à l'extrémité des rails 41. On désactive les éléments de bridage 8 et par le robot 50 on prend en charge les deux pièces raboutées ainsi que les culasses qui les surmontent. Le préhenseur 50a du robot 50 est tel que les pièces soudées peuvent être déposées sur le support d'évacuation 48 par exemple en piles tandis que les culasses sont maintenues par ce préhenseur. On procède à un nouveau chargement de pièces 46 et 47 et à la mise en place des culasses comme décrit précédemment.

Lorsqu'il s'agit de changer de type de pièces à souder, il suffit de changer le préhenseur 50a du robot 50 pour mettre les nouvelles pièces et les culasses adaptées à ces nouvelles pièces à souder.

L'architecture de cette installation présente plusieurs avantages. On peut tout d'abord en faire une version simplifiée dans laquelle les robots 49 et 50 sont supprimés et le chargement/déchargement des pièces et des culasses est assuré manuellement. En effet, l'endroit où se trouve le poste de chargement/déchargement est à l'extérieur du poste de soudage donc à l'extérieur de la zone dangereuse du rayonnement laser. Il est tout à fait possible également de doubler l'installation représentée de manière à augmenter le temps d'utilisation du poste de soudure proprement dit, en prolongeant les rails 41 pour définir un second poste de chargement/déchargement symétrique de celui représenté et associé à des robots et des dispositifs d'amenée et d'évacuation des pièces. Ainsi, on peut procéder au déchargement et à la préparation d'une table de bridage pendant que s'effectue le soudage des pièces portées par l'autre table de bridage.

## Revendications

1. Installation de raboutage de deux pièces métalliques par soudage avec un faisceau à haute densité d'énergie comportant un bâti général fixe (1, 2 ; 27 ; 40, 41) définissant un repère de référence, un support (4 ; 26, 28 ; 42) d'un émetteur du faisceau, déplaçable par rapport à ce bâti général fixe, et des moyens de bridage des pièces maintenues l'une contre l'autre avec une pression d'accostage dans le repère de référence, **caractérisée en ce que** les moyens de bridage comportent une table (7, 29, 30, 44) formée d'éléments (8) de bridage autonomes, dans laquelle l'agencement de ces éléments est dédié à la géométrie des pièces à rabouter et des moyens de mise en référence de la table dans le repère du bâti général, la table (7, 29, 30, 44) et ces moyens de mise en référence étant mobiles l'une par rapport aux autres entre au moins une première position dans laquelle la table est indépendante de ces moyens et par là hors du repère de référence et une seconde position dans laquelle la table est reliée à ces moyens et par là mise en référence dans le repère du bâti général.

2. Installation selon la revendication 1, **caractérisée en ce qu'**elle comprend des moyens pour déplacer la table (7) comportant un plateau (10) élévateur situé dans le repère du bâti général à l'aplomb duquel se trouve les moyens (6, 9) susdits de mise en référence.

3. Installation selon la revendication 2, **caractérisée en ce que** les moyens de mise en référence de la table comportent au moins un degré de liberté par rapport au bâti général.

4. Installation selon la revendication 3, **caractérisée en ce que** les éléments (8) de bridage sont magnétiques, mettant en oeuvre des aimants permanents activés et désactivés par changement d'orientation dans un circuit magnétique, ce circuit magnétique comprenant des culasses (24) situées en regard du plateau élévateur (10), retenues dans le bâti général par des moyens de fixation rendus inactifs lorsque les aimants permanents sont rendus actifs.

5. Installation selon la revendication 4, **caractérisée en ce qu'**elle comporte un convoyeur (11) pour des palettes (12) de transport de la table de bridage lors de l'alimentation et de l'évacuation de celle-ci.

6. Installation selon la revendication 1, **caractérisée en ce que** la table de bridage (29, 30) est stationnaire dans le bâti (27) général entre chaque opération de soudage d'un même type de pièces et **en ce que** le bâti (26) porteur du faisceau (5) est mis en référence dans le bâti général pour chaque opération de soudage, la table (29, 30) constituant un support de chargement/déchargement des pièces alimentées par un robot de manutention (31, 32).

7. Installation selon la revendication 6, **caractérisée en ce qu'**elle met en oeuvre des culasses de bridage associées à la table de bridage (29, 30), le robot (31, 32) assurant le transfert des culasses entre les pièces soudées évacuées et les pièces à souder mises en place sur la table de bridage (29, 30).

8. Installation selon la revendication 1, **caractérisée en ce que** la table de bridage (44) est en forme de palette de manutention des pièces à rabouter et des pièces soudées respectivement entre un poste de chargement/déchargement et un poste de soudage.

9. Installation selon la revendication 8, **caractérisée en ce qu'**elle met en oeuvre des culasses de bridage associées à la table de bridage (44) et **en ce qu'**elle comporte au moins un robot de manutention (50) des pièces à décharger entre le poste de chargement/déchargement et un support d'évacuation (48), ce robot assurant le transfert des culasses magnétiques entre les pièces soudées et les pièces à souder disposées sur la table de bridage (44).

10. Installation selon la revendication 8, **caractérisée en ce qu'**elle met en oeuvre des culasses de bridage associées à la table de bridage, la palette (44) comportant embarqués des moyens mécaniques (52) de positionnement et de manutention des culasses.

## Patentansprüche

1. Anlage zum Aneinanderfügen von zwei metallenen Teilen durch Schweißen mit einem Strahlenbündel hoher Energiedichte, umfassend ein ortsfestes Hauptgestell (1, 2; 27; 40, 41), das ein Bezugssystem festlegt, einen relativ zu diesem ortsfesten Hauptgestell verschiebbaren Träger (4; 26, 28; 42) für einen Emitter des Strahlenbündels und Mittel zum Aufspannen der Teile, die mit einem Ankopplungsdruck in dem Bezugssystem aneinander gehalten werden, **dadurch gekennzeichnet, daß** die Mittel zum Aufspannen einen Tisch (7, 29, 30, 44) einschließen, der mit unabhängigen Aufspannelementen (8) versehen ist, wobei die Anordnung dieser Elemente auf die Geometrie der aneinanderzufügenden Teile ausgerichtet wird, sowie Mittel zum Referenzieren des Tisches in dem Bezugssystem des Hauptgestells, wobei der Tisch (7, 29, 30, 44) und diese Mittel zum Referenzieren relativ zueinander zwischen mindestens einer ersten Position, in welcher der Tisch unabhängig von diesen Mittel und daher außerhalb des Bezugssystems ist, und einer zweiten Position beweglich ist, in welcher der Tisch mit diesen Mitteln verbunden und daher in dem Bezugssystem des Hauptgestells referenziert ist.

2. Anlage nach Anspruch 1, **dadurch gekennzeichnet, daß** sie Mittel zum Verstellen des Tisches (7) enthält, umfassend eine Hubplatte (10), die in dem Bezugssystem des Hauptgestells angeordnet ist und senkrecht oberhalb der sich die oben genannten Mittel (6, 9) zum Referenzieren befinden.

3. Anlage nach Anspruch 2, **dadurch gekennzeichnet, daß** die Mittel zum Referenzieren des Tisches mindestens einen Freiheitsgrad relativ zu dem Hauptgestell haben.

4. Anlage nach Anspruch 3, **dadurch gekennzeichnet, daß** die Aufspannelemente (8) magnetisch sind, wobei Dauermagneten eingesetzt werden, die durch Ändern der Ausrichtung in einem Magnetkreis aktiviert und deaktiviert werden, wobei dieser Magnetkreis Joche (24) umfaßt, die gegenüber der Hubplatte (10) angeordnet sind und in dem Hauptgestell durch Befestigungsmittel gehalten werden, die inaktiviert werden, wenn die Dauermagneten aktiviert werden.

5. Anlage nach Anspruch 4, **dadurch gekennzeichnet, daß** sie einen Förderer (11) für Transportpaletten (12) zum Transport des Aufspanntisches während des Zuführens und des Abtransportierens desselben hat.

6. Anlage nach Anspruch 1, **dadurch gekennzeichnet, daß** der Aufspanntisch (29, 30) zwischen jedem Schweißvorgang einer gleichen Art von Teilen in dem Hauptgestell (27) ortsfest ist und daß das Gestell (26) zum Tragen des Strahlenbündels (5) für jeden Schweißvorgang in dem Hauptgestell referenziert wird, wobei der Tisch (29, 30) einen Träger zum Beladen/Entladen der von einem Handhabungsroboter (31, 32) zugeführten Teile bildet.

7. Anlage nach Anspruch 6, **dadurch gekennzeichnet, daß** sie Spannjoche einsetzt, die mit dem Aufspanntisch (29, 30) verbunden sind, wobei der Roboter (31, 32) die Übertragung der Joche zwischen den abtransportierten, verschweißten Teilen und den auf dem Aufspanntisch (29, 30) angeordneten, zu schweißenden Teilen sicherstellt.

8. Anlage nach Anspruch 1, **dadurch gekennzeichnet, daß** der Aufspanntisch (44) in Form einer Förderpalette zum Fördern von aneinanderzufügenden Teilen bzw. verschweißten Teilen zwischen einer Lade-/Entladestation und einer Schweißstation vorliegt.

9. Anlage nach Anspruch 8, **dadurch gekennzeichnet, daß** sie Spannjoche verwendet, die mit dem Aufspanntisch (44) verbunden sind, und daß sie mindestens einen Handhabungsroboter (50) zur Handhabung von zu entladenden Teilen zwischen der Lade-/Entladestation und einem zum Abtransport bestimmten Träger (48) hat, wobei dieser Roboter die Übertragung der Magnetjoche zwischen den verschweißten Teilen und den auf dem Aufspanntisch (44) angeordneten, zu schweißenden Teilen sicherstellt.

10. Anlage nach Anspruch 8, **dadurch gekennzeichnet, daß** sie Spannjoche einsetzt, die mit dem Aufspanntisch verbunden sind, wobei die Palette (44) integrierte mechanische Mittel (52) zur Positionierung und Handhabung der Joche hat.

## Claims

1. An installation for joining together two pieces of metal edge to edge by welding using a beam at high energy density, the installation comprising a stationary general structure (1, 2; 27, 40, 41) defining a frame of reference, a beam-emitter support (4; 26, 28; 42) that is movable relative to said stationary general structure, and means for clamping parts held against each other with a docking pressure in the frame of reference, the installation being **characterized in that** the clamping means comprise a bench (7, 29, 30, 44) made up of independent clamping elements (8), in which the arrangement of said elements is dedicated to the shapes of the parts to be joined together and of positioning means for positioning the bench in the frame of reference of the general structure, the bench (7, 29, 30, 44) and said positioning means being movable relative to one another between at least a first position in which the bench is independent of said means and thus outside the frame of reference, and a second position in which the bench is connected to said means and consequently is in a reference position in the frame of reference of the general structure.

2. An installation according to claim 1, **characterized in that** it has means for moving the bench (7) said means including an elevator plate (10) situated in the frame of reference of the general structure with said above-mentioned positioning means (6, 9) being vertically in register therewith.

3. An installation according to claim 2, **characterized in that** the means for positioning the bench has at least one degree of freedom relative to the general structure.

4. An installation according to claim 3, **characterized in that** the clamping elements (8) are magnetic, using permanent magnets that are activated and deactivated by changing orientation in a magnetic circuit, the magnetic circuit including yokes (24) situated facing the elevator plate (10), and held in the general structure by fixing means that are made inactive when the permanent magnets are made active.

5. An installation according to claim 4, **characterized in that** it includes a conveyor (11) for conveying pallets (12) for transporting the clamping bench while it is being fed and removed.

6. An installation according to claim 1, **characterized in that** the clamping bench (29, 30) is stationary in the general structure (27) between each operation of welding parts of a given type, and **in that** the structure (26) carrying the beam (5) is positioned in the frame of reference of the general structure for each welding operation, the bench (29, 30) constituting a loading and unloading support for parts supplied by a handling robot (31, 32).

7. An installation according to claim 6, **characterized in that** it implements clamping yokes associated with the clamping table (29, 30), the robot (31, 32) serving to transfer yokes between welded parts that have been removed and parts for welding put into place on the clamping bench (29, 30).

8. An installation according to claim 1, **characterized in that** the clamping table (44) is in the form of a pallet for handling parts to be joined together edge to edge, and parts that have been welded together, respectively between a loading/unloading station and a welding station.

9. An installation according to claim 8, **characterized in that** it makes use of clamping yokes associated with the clamping bench (44), and **in that** it has at least one handling robot (50) for handling parts to be unloaded between the loading/unloading station and a removal support (48), said robot serving to transfer magnetic yokes between welded parts and parts for welding placed on the clamping bench (44).

10. An installation according to claim 8, **characterized in that** it makes use of clamping yokes associated with the clamping bench, the pallet (44) carrying mechanical means (52) for positioning and handling the yokes.
